(19) Europäisches Patentamt
European Patent Office
Office européen des brevets

(11) Numéro de publication: **0 095 974**
**B1**

(12) **FASCICULE DE BREVET EUROPEEN**

(45) Date de publication du fascicule du brevet: **20.11.86**

(51) Int. Cl.$^4$: **C 08 F 2/52**

(21) Numéro de dépôt: **83401030.8**

(22) Date de dépôt: **24.05.83**

(54) **Procédé de polymérisation en film de monomères et prépolymères insaturés, par des plasmas froids et avec des plasma-sensibilisateurs.**

(30) Priorité: **26.05.82 FR 8209181**

(43) Date de publication de la demande:
**07.12.83 Bulletin 83/49**

(45) Mention de la délivrance du brevet:
**20.11.86 Bulletin 86/47**

(84) Etats contractants désignés:
**DE GB IT**

(58) Documents cités:
**FR-A-1 477 247**
**US-A-3 573 180**

(73) Titulaire: **CENTRE NATIONAL DE LA RECHERCHE SCIENTIFIQUE (CNRS)**
**13 Quai Anatole France**
**F-75700 Paris (FR)**

(72) Inventeur: **Brosse, Jean-Claude**
**La Closeraie Route du Luart**
**Duneau 72160 Connerre (FR)**
Inventeur: **Epaillard, Fabienne**
**4, rue Saint-Flaceau**
**F-72000 Le Mans (FR)**
Inventeur: **Legeay, Gilbert**
**12, rue de l'Eglise Saint-Saturnin**
**F-72650 La Milesse (FR)**

(74) Mandataire: **Amaudric du Chaffaut, François et al**
**c/o Cabinet Harlé & Phélip 21, rue de la Rochefoucauld**
**F-75009 Paris (FR)**

**EP 0 095 974 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

La présente invention concerne la polymérisation en film de monomères et de prépolymères insaturés, par des plasmas froids. On entend ici par "plasmas froids", des plasmas dont la température ne dépasse pas 250°C environ.

L'invention concerne plus particulièrement la polymérisation en film de monomères ou prépolymères lourds insaturés, par des plasmas froids. On entend ici par "monomères et prépolymères lourds insaturés", des matières possédant des doubles liaisons ou insaturations capables de s'ouvrir au cours d'un processus de polymérisation et demeurant essentiellement à l'état liquide ou solide lorsqu'elles sont placées sous un vide de type primaire ou secondaire, et cela à des températures ne dépassant pas leurs températures de décomposition.

On désignera aussi dans la suite ces monomères et prépolymères par le terme "matières à polymériser".

Selon la technique antérieure, la polymérisation de tels monomères et prépolymères lourds insaturés s'effectue soit par des radiations ultraviolettes (U.V.), soit par des radiations très fortement énergétiques, telles que des rayons X, gamma, ou bêta, soit par polymérisation thermique.

Il est connu que l'utilisation de rayons U.V. est limitée pour de nombreuses applications par l'épaisseur du film à polymériser: celui-ci ne doit pas dépasser quelques dizaines de micromètres. De plus, les films chargés par des additifs inorganiques ou organiques sont difficilement durcis.

Il est connu également que l'utilisation de rayonnements hautement énergétiques conduit à des résultats satisfaisants, mais que le développement industriel d'une telle technique est très fortement limité par le prix élevé et l'importance de l'équipement et des appareillages nécessaires à la production du rayonnement et à la protection des personnes et que les rayonnements mis en oeuvre peuvent être nuisibles pour le film ou son substrat.

On sait par ailleurs qu'il est possible d'obtenir une polymérisation induite par des plasmas de monomères insaturés en phase liquide (voir par exemple: Journal of Polymer Science, Polymer Letters Edition, (1979), vol. 17, No 11, pp. 687—690 (1978), vol. 16, pp. 309—311; Polymer Bulletin (1981) *5*, pp. 61—66 et (1980), *3*, pp. 247—251) et d'utiliser des polymères ainsi obtenus notamment comme biomatériaux (voir Biomaterials, 1982, vol. 3, Avril, pp. 68—77). Ces techniques, qui n'utilisent aucun autre intermédiaire dans la polymérisation sont apparues comme conduisant à l'obtention de couches minces polymérisées essentiellement en surface et empêchant en pratique de réaliser en des temps suffisamment courts des films ou dépôts durcis à coeur et en tout état de cause ne permettent pas pratiquement d'espérer obtener des films polymérisés dont l'épaisseur soit de plus d'environ 20 µm, sachant que le taux de conversion doit être égal à au moins 50% pour être convenable.

De plus, hormis le fait que les rendements de ces polymérisations demeurent le plus souvent faibles, les produits polymères obtenus peuvent être des polymères gélatineux et même encore pour partie des polymères solubles, ce qui est tout à fait inacceptable pour la plupart des applications.

On connaît aussi, par le brevet francais No 1.477.247 un procédé de production d'une pellicule polymérisée suivant lequel on applique, sur la surface d'un substrat, une quantité désirée de la matière polymérisable, et on expose cette surface à l'action d'un sensibilisateur gazeux activé par un courant électrique. Il est cependant précisé que l'on doit veiller à éviter une trop grande profondeur de la matière polymérisable pour qu'elle puisse être efficacement polymérisée par le sensibilisateur activé.

On a maintenant trouvé de facon inattendue qu'on obtient une polymérisation en film de monomères ou de prépolymères lourds insaturés, avec un haut rendement et sous des épaisseurs pouvant atteindre 200 micromètres ou plus, avec formation de polymères durs, en polymérisant des monomères ou des prépolymères lourds insaturés, en film, par voie radicalaire, sous l'action d'un plasma froid auquel est associé au moins un sensibilisateur à l'action du plasma, ledit sensibilisateur étant incorporé de façon physique ou chimique à la matière à polymériser. Les sensibilisateurs mis en oeuvre dans le procédé selon la présente invention sont essentiellement des générateurs de radicaux libres, obligatoirement liquides ou solides puisque devant être incorporés aux monomères ou prépolymères, contrairement aux sensibilisateurs utilisés dans le procédé conforme au brevet français précité, lesquels sont gazeux et correspondent d'ailleurs au gaz plasmagène utilisé dans la présente invention.

Selon la présente invention, on entend par sensibilisateur à l'action du plasma (que l'on désignera également dans la suite de cette description par l'expression "sensibilisateur SP"), toute substance ou mélange de substances donnant un test positif avec le diphénylpicrylhydrazyle (DPPH) et/ou faisant pratiquement disparaître la bande caractéristique, en spectrographie ou en spectroscopie, des sites générateurs de radicaux libres de la substance susceptible de constituer un sensibilisateur SP sous l'action du plasma froid.

En variante, on peut aussi sélectionner le sensibilisateur SP en retenant ceux qui permettent d'observer par des méthodes spectrographiques ou en spectroscopiques, la disparition quasi-totale des sites de polymérisation dans des mélanges de la substance susceptible de constituer un sensibilisateur SP, testée et de la matière à polymériser sous l'effet du plasma froid.

La présente invention a donc pour premier objet un procédé de polymérisation en film de monomères et prépolymères insaturés, sous l'action de plasmas froids, caractérisé en ce qu'on utilise au moins un sensibilisateur à l'action du plasma, ledit sensibilisateur étant incorporé de façon physique ou chimique à

la matière à polymériser, et ladite matière à polymériser et ledit sensibilisateur se trouvant à l'état de film supporté avant la mise en oeuvre des moyens destinés à assurer la polymérisation.

Dans ce procédé, les choix du gaz assurant le plasma, de la température du plasma, ainsi que du sensibilisateur SP sont étroitement liés et interdépendants; en pratique, on choisit un gaz et, pour différentes températures de plasma qu'on se fixe, on essaie une ou plusieurs substances susceptibles de constituer un sensibilisateur SP, qu'on soumet au test au DPPH décrit ci-dessous ou au test en spectrographie, par exemple IR, (dans ce dernier cas, avec ou sans la matière à polymériser, selon la variante choisie). Si l'essai est satisfaisant pour au moins l'une des températures choisies, on retient, comme sensibilisateur SP, la substance ou le mélange de substances testé; si l'essar ne donne pas satisfaction, on opte pour une autre substance susceptible de constituer un sensibilisateur SP ou mélange de celles-ci, et on répète l'essai de routine susdit, ces opérations de sélection étant à la portée de l'homme du métier.

Le dosage par le diphénylpicrylhydrazyle (DPPH) est un dosage colorimètrique par fixation de radicaux libres sur cette molécule; il s'effectue d'ordinaire en solution. Ce test bien connu est décrit dans l'ouvrage "Introduction à la Chimie macromoléculaire" de G. Champetier (Herman, 1969).

On a présentement appliqué cette méthode comme test de la décomposition des sensibilisateurs SP en masse. Pour ce faire, on mélange le DPPH et la substance susceptible de constituer un sensibilisateur SP à essayer, dans une proportion de 1 à 20% en moles par rapport à ladite substance susceptible de constituer un sensibilisateur SP, et on étale le mélange sur un substrat de verre ou en aluminium. La réaction de dosage se schématise ainsi:

$$R\text{—}R \xrightarrow{\text{plasma}} 2\,R$$

$$R+(C_6H_5)_2N\text{—}N\text{—}C_6H_2(NO_2)_3 \rightarrow \begin{matrix} C_6H_5 \\ RC_6H_4 \end{matrix} N\text{—}NH\text{—}C_6H_2(NO_2)_3$$

Couleur violette — Couleur jaune

(fixation du DPPH par un radical issu de la décomposition du sensibilisateur SP par le plasma froid).

Soumis à un plasma froid, un sensibilisateur SP approprié se décompose en deux radicaux qui se fixent sur le DPPH présente dans le film. Un dosage correspond au passage du film de la couleur violette à la couleur jaune.

Les plasmas froids sont créés dans des enceintes réactionnelles où règne un vide inférieure à environ 660 Pa (5 mm de mercure environ), et sont soumis à une décharge électrique de type alternatif.

La fréquence de la décharge se situe dans le domaine des ondes radio; de manière générale, les appareils du commerce donnent des fréquences de 13,56 à 27,12 MHz, mais ces valeurs ne sont pas limitatives.

La température du plasma est fonction de la puissance de la décharge; celle-ci est généralement inférieure à quelques centaines de watts pour de petites installations et peut atteindre quelques kilowatts pour des installations volumineuses.

De manière générale, les plasmas sont créés dans le vide partiel d'un gaz ou d'un mélange de gaz. Les gaz appropriés sont connus de l'homme de métier et parmi les plus utilisés, on peut citer l'azote, l'argon, l'hélium, le gaz carbonique, l'oxygène et le tétrafluorométhane (Fréon 14®), qui ne sont que des exemples illustratifs.

Selon l'invention, on met en oeuvre un sensibilisateur SP (unique ou composé d'un mélange de sensiblisateurs SP) après l'avoir, si nécessaire, soumis au préalable à l'une au moins des deux tests d'opérabilité et d'efficacité détaillés plus haut.

Dans le procédé selon l'invention, on met de préférence en oeuvre une proportion de sensibilisateur SP représentant d'environ 0,1 à 10% de préférence 1 à 5% environ, en poids par rapport au poids des monomères ou prépolymères composant le film à polymériser.

La proportion de sensibilisateur SP introduite dans les films de matière à polymériser est donc généralement comprise entre environ 0,1 et 10% en poids/poids. On préfère cependant utiliser une proportion de 1 à 5% environ. La gamme approximative ainsi définie s'explique comme suit:

— pour de plus faibles proportions, inférieures à environ 0,1%, l'effet de l'addition du sensibilisateur SP est pratiquement négligeable.

— pour de fortes proportions, supérieures à environ 10%, par contre, l'effet obtenu avec le sensibilisateur SP peut être le contraire de l'effet attendu, c'est-à-dire qu'on obtient des taux de conversion moins importants et des polymères de plus faibles masses moléculaires, ce qui est préjudiciable en règle générale.

Parmi les sensibilisateurs SP utiles, on préfère les amorceurs radicalaires de type diazoïque, tels que l'azobisisobutyronitrile; les composés peroxydiques ou hydroperoxydiques, comme l'hydroperoxyde de cumyle, le peroxyde de benzoyle, le peroxyde de dicumyle; les peresters, tels que le perbenzoate de tert-butyle; et les amorceurs utilisés habituellement en photochimie, comme les cétones aromatiques (parmi lesquelles on peut citer la chloro-thioxanthone, la benzathone, l'acide benzoyl-2 benzoïque,

l'éthylanthraquinone, la benzoïne et ses dérivés, et les produits connus sous les dénominations commerciales Darocur® et Irgacure®). Le produit commercialement dénommé Darocur® 1116 est la (4-isopropylphényl)-1 hydroxy-2 méthyl-2 propanone-1; le produit commercialisé sous la dénomination Darocur® 1173 est l'hydroxy-2 méthyl-2 phényl-1 propanone-1, et le produit du commerce dénommé Irgacure® 651 est la diméthyloxy-2,2 phényl-2 acétophénone.

Les exemples qui suivent illustrent plus en détail le mode opératoire à suivre et les résultats obtenus par le présent procédé.

Le procédé selon l'invention est applicable à tous les monomères et prépolymères insaturés lourds, à la seule condition que ceux-ci ne soient pas sujets à un phénomène rapide d'ébullition ou de sublimation parasite lorsqu'ils sont soumis aux conditions opératoires nécessaires à la création du plasma, à savoir à la température et à la pression du plasma.

Si les matières à polymériser mises en oeuvre sont trop volatiles on dispose de méthodes connues (telles que l'addition de substances paraffiniques ou de substances complexantes) pour élever leur point d'ébullition.

Les matières ainsi susceptibles d'être polymérisées selon le présent procédé sont les monomères insaturés lourds, notamment les monomères acryliques (par exemple le triacrylate et le triméthacrylate de triméthylolpropane, TMPTA et TMPTMA; et le méthacrylate de stéaryle, MS) et des monomères vinyliques comme de divinyl benzène, ainsi que les prépolymères insaturés lourds, tels que des prépolymères de type acrylique comme par exemple le diacrylate de polyéthylèneglycol, PEGDA, les uréthannes acryliques, les époxyacryliques et les polyesteracryliques.

Selon une variante avantageuse du procédé conforme à l'invention, le sensibilisateur SP est incorporé chimiquement à la matière à polymériser, ce qui signifie en pratique qu'il est fixé par liaison de covalence sur des sites appropriés de ladite matière à polymériser, de préférence dans la proportion indiquée plus haut. Pour chaque cas d'espèce, l'homme du métier est à même de déterminer les sites et les fonctions chimiques à faire coopérer pour réaliser cette combinaison chimique, donc d'effectuer un choix approprié des composés respectifs à mettre en oeuvre, et de conduire les réactions assurant les liaisons covalentes susdites.

Les films de monomères ou de prépolymères à polymériser sont déposés sur un support, par exemple par sérigraphie ou à l'aide d'une barre de Conway; le support peut être rigide ou souple et n'a pratiquement pas d'influence sur la polymérisation.

On apprécie le taux de polymérisation atteint en fin d'opération, soit par dosage des doubles liaisons résiduelles (en infra-rouge par exemple), soit par détermination de la dureté par une méthode classique telle que celle utilisant les crayons de dureté (échelle 8 B à 8 H).

L'invention a également pour objet les produits polymères et les films polymérisés en couche mince pouvant atteindre une épaisseur de 200 µm et plus, obtenus par ce procédé.

Les polymères ainsi préparés sont utiles notamment dans l'industrie électronique, où il est fait usage de couches minces de polymères soit non chargés, soit chargés avec des poudres minérales ou métalliques (pour la réalisation de circuits électroniques hybrides, multicouches), ainsi que dans d'autre industries, pour la réalisation par exemple de membranes ou de revêtements protecteurs, et plus généralement pour la réalisation en l'amélioration de l'état de surface de biomatériaux (voir l'article de Biomaterials cité plus haut).

L'invention est décrite et illustrée plus concrètement dans les exemples et rapports d'essais comparatifs ci-après, qui ne la limitent aucunement. Ces exemples sont complétés par les planches de dessins annexées, dans lesquelles:

Figure 1 représente les vitesses de polymérisation de différents acrylates lourds, non distillés, dans un plasma d'hélium, en l'absence de sensibilisateur SP,

Figure 2 représente les polymérisations comparées de TMPTA dans différents plasmas;

Figure 3 représente l'influence du sensibilisateur SP (1% en poids) sur la polymérisation de TMPTA dans un plasma d'hélium;

Figure 4 représente l'influence de l'épaisseur du film sur la polymérisation de PEGDA dans un plasma d'hélium, sans sensibilisateur SP;

Figure 5 représente l'influence du sensibilisateur SP sur la polymérisation en épaisseur, pour une puissance de 100 W et un temps de 5 min, dans un plasma d'hélium;

Figure 6 représente les spectres d'émission de différents et leur influence sur la décomposition éventuelle de substances susceptibles de constituer des sensibilisateurs (Dgaz=100 $cm^3$/min, p=100 W);

Figure 7 représente l'influence de la température et de la puisance dans l'émission UV d'un plasma d'hélium ($D_{He}$=100 $cm^3$).

Les abréviations utilisées dans le présente texte et dans les figures annexées sont expliquées ci-après:

| | |
|---|---|
| RM | rouge de méthyle |
| CTX | chlorothioxanthone |
| CM | cétone de Michler |
| AIBN | azobisisobutyronitrile |
| D 1116=Darocur 1116 | (voir plus haut) |

| | |
|---|---|
| D 1173=Darocur 1173 | (voir plus haut) |
| PBTB | perbenzoate de tert-butyle |
| PDC | peroxyde de dicumyle |
| HPC | hydroperoxyde de cumyle |
| TMPTA | triacrylate de triméthylolpropane |
| TMPTMA | triméthacrylate de triméthylolpropane |
| MS | méthacrylate de stéaryle |
| PEGDA | diacrylate de polyéthylèneglycol |
| EDGA | acrylate d'éthyldiglycol. |

Exemple 1 (comparatif)

Polymérisation de monomères acryliques en l'absence de sensibilisateur SP dans un plasma d'hélium.

On a déposé à l'aide d'une barre de Conway des films de TMPTA, TMPTMA, PEGDA, MS et EDGA avec de la paraffine, à une épaisseur de 6 µm, sur des substrats en aluminium préalablement nettoyés. On a exposé ces films pendant des durées de 1 à 15 minutes à un plasma d'hélium ayant une puissance de décharge électrique égale à 100 W, dans un réacteur approprié. Le vide dans l'enceinte réactionnelle était de 0,5 mm de mercure, soit 66 Pa, environ. Les taux de polymérisation ont été déterminés par la disparition des bandes correspondant aux doubles liaisons des monomères, par spectroscopie infrarouge.

Il est apparu que, dans ces conditions opératoires, les monomères durcissaient en quelques minutes, mais cette polymérisation était loin d'atteindre un taux de conversion suffisant pour tous les monomères, comme le montrent les résults consignés sur la figure 1.

Exemple 2 (comparatif)

Polymérisation du triacrylate de triméthylolpropane dans des plasmas de différents gaz.

Avec des échantillons préparés comme indiqué dans l'exemple 1 et en utilisant des gaz différents pour réaliser la plasma, on a obtenu les résultats rapportés sous forme de courbes sur la figure 2.

Il est apparu que, parmi les gaz utilisés, le tétrafluorométhane (Fréon 14®), puis l'hélium et l'argon conduisaient à des vitesses de polymérisation plus rapides que l'azote, l'oxygène et le gaz carbonique.

Exemple 3

Influence de l'introduction d'un sensibilisateur SP dans la polymérisation du triacrylate de triméthylolpropane.

On a préparé les échantillons comme indiqué dans l'exemple 1, mais en y introduisant, à raison de 1% en poids/poids de la résine, un sensibilisateur SP. Les résultats de la polymérisation mise en oeuvre dans les conditions indiquées dans l'exemple 1 sont consignés sur la figure 3, d'où il ressort que la vitesse de polymérisation a été notablement augmentée, de même que le taux de conversion maximum.

Exemple 4 (comparatif)

Influence de l'épaisseur des films (polymérisation du diacrylate de polyéthylèneglycol).

On a préparé les échantillons comme indiqué dans l'exemple 1 et on a effectué des polymérisations, dans les conditions indiquées dans l'exemple 1, mais avec des durées de polymérisation sous plasma différentes et sous des épaisseurs de films différentes. Les résultats consignés sur la figure 4, montrent que c'est seulement après 15 minutes d'exposition à un plasma d'hélium qu'on peut encore polymériser avec un taux de conversion qui ne soit pas tombé en dessous de 60% des films ayant une épaisseur égale à 50 µm. Audelà de 50 µm, le taux de conversion n'est plus satisfaisant avec aucun des gaz essayés.

Exemple 5

Influence de l'épaisseur des films et de la nature du sensibilisateur SP dans le cas de la polymérisation de triacrylate de triméthylolpropane dans un plasma d'hélium.

On a préparé les échantillons comme indiqué dans l'exemple 3. Après polymérisation dans les conditions indiquées dans l'exemple 1, on a obtenu les résultats rapportés sur la figure 5. On voit notamment que le triacrylate de triméthylolpropane est polymérisé avec un taux de conversion voisin de 90% avec 1% de Darocur 1116 pour des films ayant de 1 à 50 µm d'épaisseur, et même encore avec un taux de conversion supérieur à 75% pour des films de 50 à 200 µm. Pour des films de 200 µm, le taux de conversion était encore de 68% avec le perbenzoate de tert-butyle et de 65% avec l'azobisisobutyronitrile.

Exemple 6

Influence de la nature des gaz plasmagènes.

On a représenté sur la figure 6 un diagramme décrivant les spectres d'émission de quelques gaz soumis à des décharges électriques, et donnant ainsi des plasmas, à une puissance de 100 W. Les spectres (traits horizontaux) ont été tracés à partir des résultats fournis dans la littérature pour les substances concernées indiquées en regard.

On voit qu'une substance donnée se décompose, pour constituer un sensibilisateur SP au sens de l'invention, dans un gaz donné si le trait vertical représentatif du spectre d'émission de ce gaz dans les

conditions énergétiques de formation du plasma coupe le trait horizontal correspondant à la substance concernée.

Exemple 7

Pour montrer l'influence de la température et de la puissance dans le cas d'un plasma d'hélium, on a effectué un certain nombre d'essais, avec diverses substances susceptibles de constituer des sensibilisateurs SP et on a tracé le diagramme représenté sur la figure 7 avec les résultats obtenus. Le rôle de la puissance, ainsi que la la température, sur les caractéristiques des plasmas à associer aux sensibilisateurs SP selon l'invention (dont les exemples sont indiquées par les traits horizontaux respectifs sur le diagramme) apparaît ainsi clairement. Or il faut souligner que la température des substrats s'est avérée varier de façon considérable avec le volume du réacteur utilisé.

Dans le diagramme susdit, la puissance P est indiquée en watts (W), tandis qu'on a aussi indiqué la pression dans le réacteur ($\bar{P}$) en torrs (T), sachant que 1 torr$\simeq 1{,}33\times 10^2$ Pa.

**Revendications**

1. Procédé pour la polymérisation en film de monomères ou de prépolymères qui sont des matières polymérisables à liaison insaturée demeurant essentiellement à l'état liquide ou solide lorsqu'elles sont placées dans un vide de type primaire ou secondaire, et cela à des températures ne dépassant pas leurs températures de décomposition, ladite polymérisation étant effectuée par voie radicalaire sous l'action d'un plasma dont la température ne dépasse pas 250°C, caractérisé en ce qu'on utilise un sensibilisateur à l'action du plasma, ledit sensibilisateur étant incorporé de façon physique ou chimique à la matière à polymériser, et ladite matière à polymériser et ledit sensibilisateur se trouvant à l'état de film supporté, avant la mise en oeuvre des moyens destinés à assurer la polymérisation.

2. Procédé selon la revendication 1, caractérisé en ce qu'on met en oeuvre, comme sensibilisateur à l'action du plasma, une substance, ou un mélange de substances, donnant un test positif au diphénylpicrylhydrazyle (radical libre DPPH) avec le plasma considéré.

3. Procédé selon l'une quelconque des revendications 1 ou 2, caractérisé en ce qu'on utilise une proportion de sensibilisateur à l'action du plasma représentant d'environ 0,1 à 10% et, de préférence, d'environ 1 à 5%, en poids par rapport au poids des monomères ou prépolymères composant le film à polymériser.

4. Procédé selon la revendication 1, caractérisé en ce qu'on utilise des sensibilisateurs à l'action du plasma choisis parmi: les amorceurs radicalaires de type diazoïque, tels que l'azobisisobutyronitrile; les composés peroxydiques ou hydroperoxydiques, tels que l'hydroperoxide de cumyle, le peroxyde de benzoyl et le peroxyde de dicumyle; les peresters, tels que le perbenzoate de tert-butyle; et les amorceurs utiles en polymérisation photochimique, tels que les cétones aromatiques.

5. Procédé selon l'une quelconque des revendications 1 ou 4, caractérisé en ce qu'on utilise des plasmas d'un gaz ou mélange de gaz choisi(s) parmi l'azote, l'argon, l'hélium, le gaz carbonique, l'oxygène et le tétrafluorométhane.

6. Film polymérisé en couche mince, caractérisé en ce qu'il a une épaisseur d'environ 200 µm et plus, et a été obtenu par le procédé selon l'une quelconque des revendications 1 à 5.

**Patentansprüche**

1. Verfahren zur Polymerisation von Monomeren oder Prepolymeren, die polymerisierbaren Materialien mit ungesättigter Bindung sind und im wesentlichen im flüssigen oder festen Zustand vorliegen, wenn sie in ein Vakuum vom primären oder sekundären Typ gebracht werden, zu Folien bei Temperaturen, die ihre Zersetzungstemperaturen nicht überschreiten, wobei die Polymerisation auf freiradikalischem Wege unter der Einwirkung eines Plasmas durchgeführt wird, dessen Temperatur 250 Grad Celsius nicht überschreitet, dadurch gekennzeichnet, daß man einen Sensibilisator für die Wirkung des Plasmas verwendet, wobei der Sensibilisator in physikalischer oder chemischer Weise in das zu polymerisierende Material eingearbeitet wird und das zu polymerisierende Material und der Sensibilisator sich vor dem Einsatz der Mittel, die dazu dienen, die Polymerisation sicherzustellen, im Zustand einer trägergestützten Folie befinden.

2. Verfahren nach Anspruch 1, dadurch gekennzeichnet, daß man als Sensibilisator für die Wirkung des Plasmas eine Substanz oder ein Gemisch von Substanzen verwendet, die mit dem infrage kommenden Plasma einen positiven Test mit Diphenylpicrylhydrazyl (freies DPPH-Radikal) ergeben.

3. Verfahren nach irgendeinem der Ansprüche 1 oder 2, dadurch gekennzeichnet, daß man den Sensibilisator für die Wirkung des Plasmas in einem Anteil verwendet, der etwa 0,1 bis 10%, vorzugsweise etwa 1 bis 5 Gew.-%, bezogen auf das Gewicht der die zu polymerisierende Folie bildenden Monomeren oder Prepolymeren, darstellt.

4. Verfahren nach Anspruch 1, dadurch gekennzeichnet, daß man für die Wirkung des Plasmas Sensibilisatoren verwendet, die ausgewählt sind unter freie Radikale auslösenden Verbindungen vom Diazo-Typ, z.B. Azobisisobutyronitril, Peroxid- oder Hydroxyperoxidverbindungen, z.B. Cumylhydroperoxid, Benzoylperoxid und Dicumylperoxid, den Perestern, z.B. dem tert-Butylperbenzoat und den in der photochemischen Polymerisation nützlichen auslösenden Verbindungen, z.B. den aromatischen Ketonen.

5. Verfahren nach irgendeinem der Ansprüche 1 oder 4, dadurch gekennzeichnet, daß man Plasmas eines Gases oder eines Gemisches von Gasen verwendet, die aus Stickstoff, Argon, Helium, Kohlensäuregas, Sauerstoff und Tetrafluoromethan augewählt sind.

6. Als Dünnschicht polymerisierte Folie, dadurch gekennzeichnet, daß sie eine Dicke von etwa 200 µm und mehr haben und nach dem Verfahren nach irgendeinem der Ansprüche 1 bis 5 erhalten worden ist.

**Claims**

1. Process for the film polymerization of monomers or of prepolymers which are polymerizable substances containing an unsaturated bond remaining substantially in a liquid or solid state when they are placed in a vacuum of a primary or secondary type, this being done at temperatures which do not exceed their decomposition temperatures, the said polymerization being performed by a radical route under the effect of a plasma whose temperature does not exceed 250°C, characterized in that a sensitizer to the effect of the plasma is employed, the said sensitizer being incorporated physically or chemically into the substance to be polymerized, and the substance to be polymerized and the said sensitizer being in the form of a supported film before the application of the means intended to effect the polymerization.

2. Process according to Claim 1, characterized in that a substance, or a mixture of substances, giving a positive test for diphenylpicrylhydrazyl (DPPH free radical) with the plasma in question is used as a sensitizer to the effect of the plasma.

3. Process according to either of Claims 1 and 2, characterized in that the proportion of sensitizer to the effect of the plasma which is used represents from approximately 0.1 to 10% and, preferably, from approximately 1 to 5%, by weight based on the weight of the monomers or prepolymers forming the film to be polymerized.

4. Process according to Claim 1, characterized in that sensitizers to the effect of the plasma are used which are chosen from: radical initiators of the diazo type such as azobisisobutyronitrile, peroxide or hydroperoxide compounds such as cumyl hydroperoxide, benzoyl peroxide and dicumyl peroxide, peresters as such tertbutyl perbenzoate, and initiators which are used in photochemical polymerization, such as aromatic ketones.

5. Process according to either of Claims 1 or 4, characterized in that plasmas of a gas or mixture of gases chosen from nitrogen, argon, helium, carbon dioxide, oxygen and tetrafluoromethane are used.

6. Film polymerized as a thin layer, characterized in that it has a thickness of approximately 200 µm and more, and has been produced by the process according to any one of Claims 1 to 5.

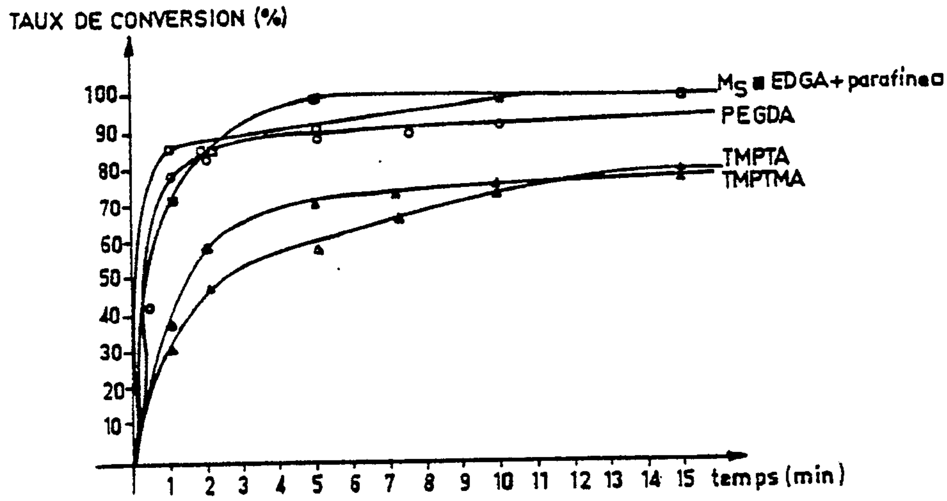
TAUX DE CONVERSION (%)
100
90
80
70
60
50
40
30
20
10
1 2 3 4 5 6 7 8 9 10 11 12 13 14 15 temps (min)
$M_S$ = EDGA+ parafine□
PEGDA
TMPTA
TMPTMA

FIG.1

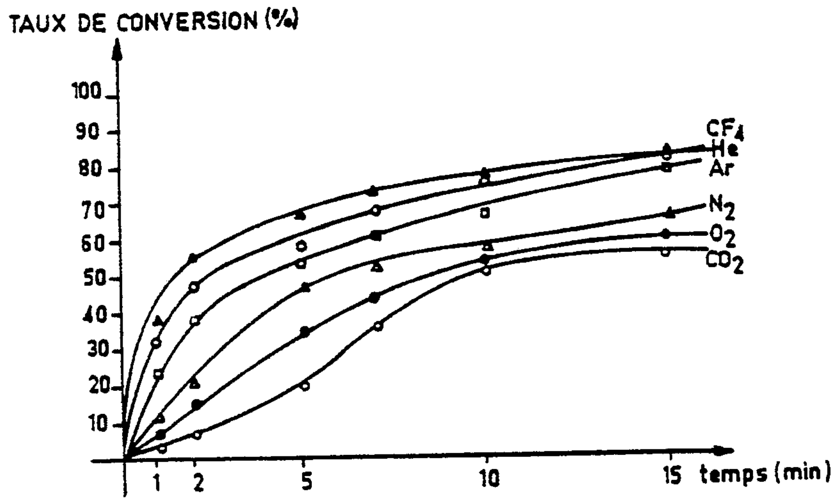
TAUX DE CONVERSION (%)
100
90
80
70
60
50
40
30
20
10
1 2 5 10 15 temps (min)
$CF_4$
He
Ar
$N_2$
$O_2$
$CO_2$

FIG.2

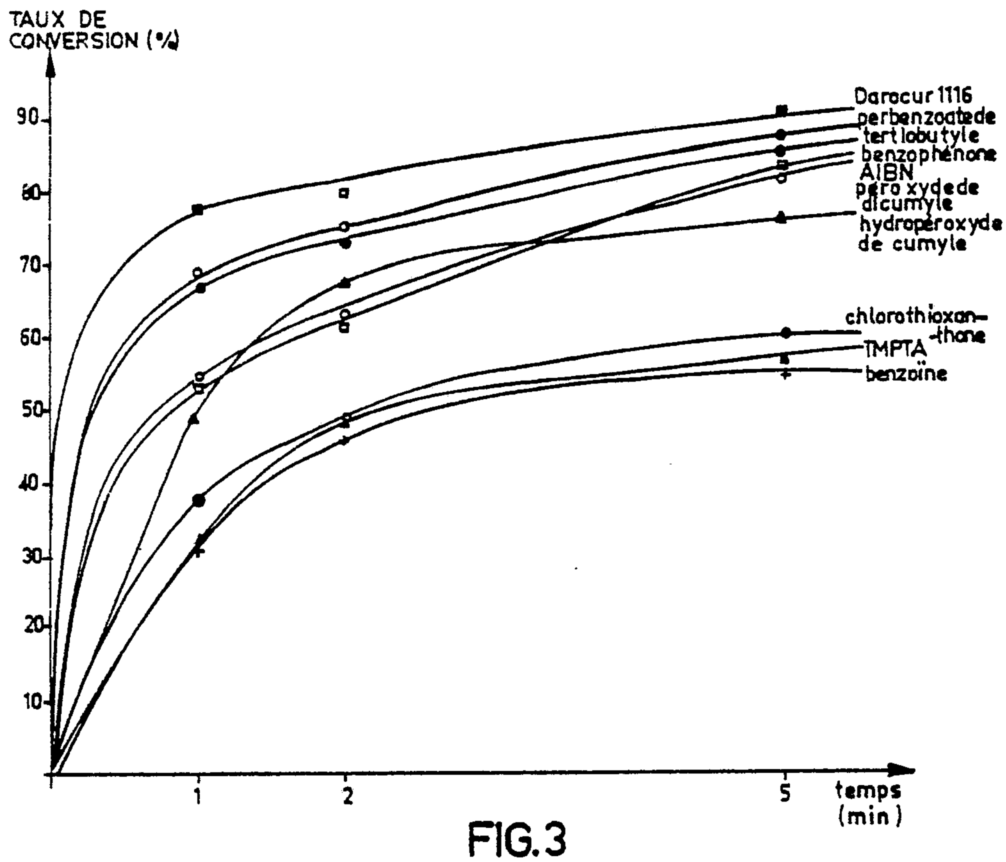
TAUX DE CONVERSION (%)
90
80
70
60
50
40
30
20
10
1
2
5
temps (min)
Darocur 1116
perbenzoatede tertiobutyle
benzophénone
AIBN
péroxydede dicumyle
hydropéroxyde de cumyle
chlorothioxan-thone
TMPTA
benzoïne

FIG.3

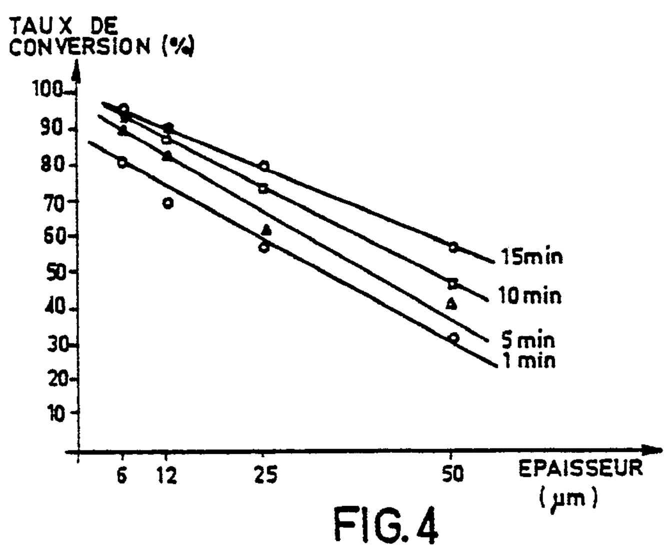
TAUX DE CONVERSION (%)
100
90
80
70
60
50
40
30
20
10
6
12
25
50
EPAISSEUR (µm)
15min
10 min
5 min
1 min

FIG.4

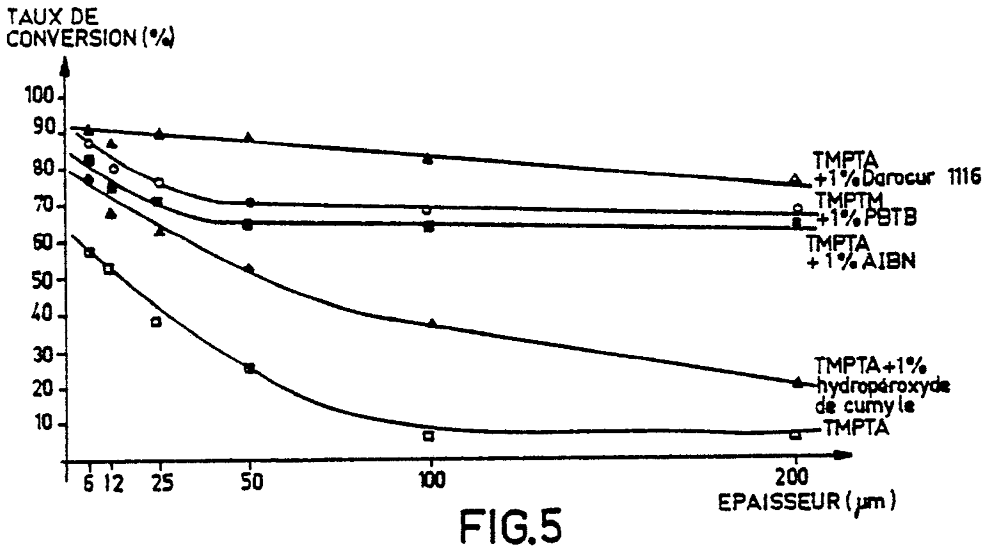
TAUX DE CONVERSION (%)
100
90
80
70
60
50
40
30
20
10
6
12
25
50
100
200
EPAISSEUR (µm)
TMPTA +1% Darocur 1116
TMPTM +1% PBTB
TMPTA +1% AIBN
TMPTA+1% hydropéroxyde de cumyle
TMPTA

FIG.5

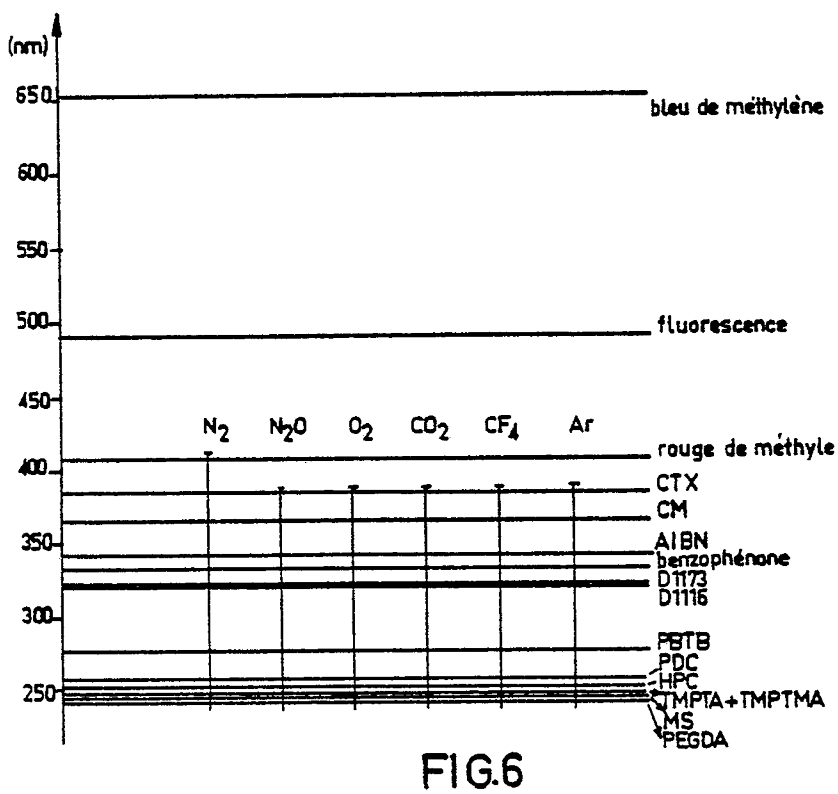
(nm)
650
600
550
500
450
400
350
300
250
$N_2$
$N_2O$
$O_2$
$CO_2$
$CF_4$
Ar
bleu de méthylène
fluorescence
rouge de méthyle
CTX
CM
AIBN
benzophénone
D1173
D1116
PBTB
PDC
HPC
TMPTA+TMPTMA
MS
PEGDA

FIG.6

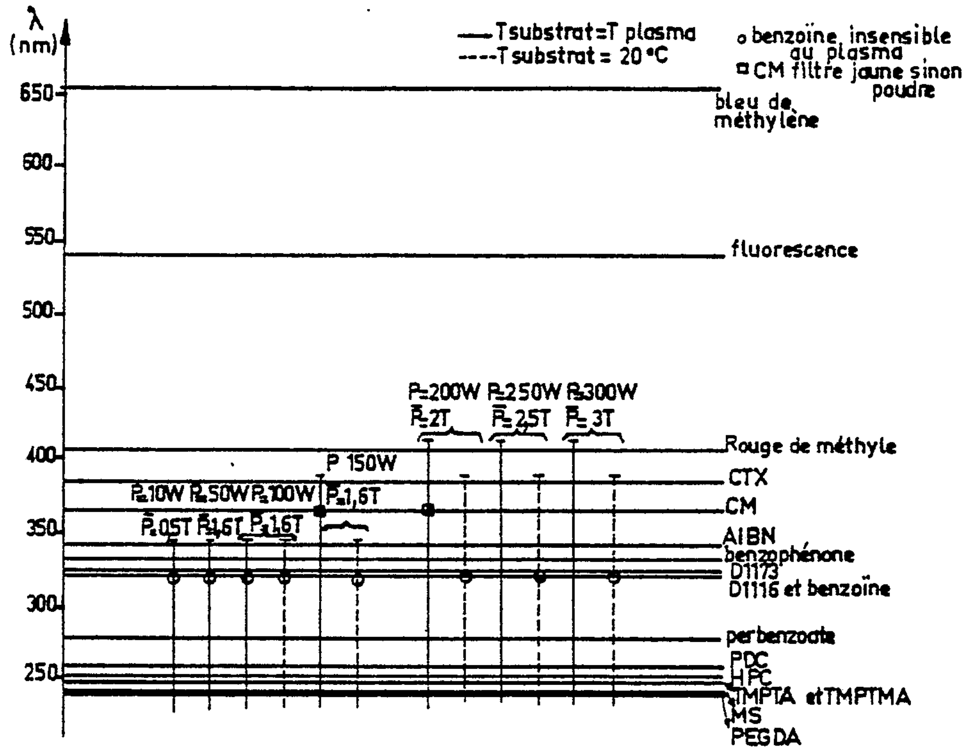
λ (nm)
650
600
550
500
450
400
350
300
250
—Tsubstrat=T plasma
----T substrat = 20 °C
o benzoïne insensible au plasma
¤ CM filtre jaune sinon poudre
bleu de méthylène
fluorescence
P=200W P=250W P=300W
P=2T P=2,5T P=3T
P 150W
P=1,6T
P=10W P=50W P=100W
P=0,5T P=1,6T P=1,6T
Rouge de méthyle
CTX
CM
AIBN
benzophénone
D1173
D1116 et benzoïne
perbenzoate
PDC
HPC
TMPTA et TMPTMA
MS
PEGDA

FIG.7